# EUROPÄISCHE PATENTSCHRIFT

(11) **EP 1 943 899 B1**
(45) Veröffentlichungstag und Bekanntmachung des Hinweises auf die Patenterteilung: **09.11.2011**
(21) Anmeldenummer: 08000332.0
(22) Anmeldetag: 10.01.2008
(51) Int. Cl.: A01M 7/00

(54) **Vorrichtung zum Spritzen von Pflanzenzeilen**
Device for spraying rows of plants
Dispositif destiné à pulvériser des cellules végétales

(30) Priorität: 13.01.2007 DE 102007002046
(43) Veröffentlichungstag der Anmeldung: 16.07.2008
(73) Patentinhaber: Müller, Aloys, 55546 Pfaffen-Schwabenheim (DE)
(72) Erfinder: Müller, Aloys, 55546 Pfaffen-Schwabenheim (DE)
(74) Vertreter: Becker, Bernd

(56) Entgegenhaltungen:
- EP-A- 0 327 037
- WO-A-93/17551
- DE-A1- 2 926 922
- FR-A- 2 868 341
- US-A- 5 269 461

## Beschreibung

Die Erfindung bezieht sich auf eine Vorrichtung zum Spritzen von Pflanzenzeilen, insbesondere Spalierkulturen, die entlang der jeweiligen Pflanzenzeile verfahrbar ist, mit einem Rahmen zur Halterung von mit einem Spritzmittel beaufschlagten Spritzmitteldüsen und mit mit mindestens einem Gebläse gekoppelten Luftdüsen, die den Spritzmitteldüsen derart zugeordnet sind, dass die aus den in zwei Reihen angeordneten Luftdüsen austretende Luft das aus den Spritzmitteldüsen austretende Spritzmittel in Richtung der Pflanzenzeile führt, wobei die aus den Luftdüsen der ersten Reihe austretende Luft das Spritzmittel beaufschlagt und die aus den Luftdüsen der zweiten Reihe austretende Luft einen Luftvorhang um das Luft-Spritzmittelgemisch bildet.

Eine derartige Vorrichtung ist aus der EP 0 327 037 A2 bekannt.

Kultur- und Nutzpflanzen, wie Reben oder Obstbäume und dergleichen, werden häufig in langen und im Wesentlichen geradlinigen Reihen oder Zeilen angepflanzt, um eine maschinelle Bearbeitung, Düngung und/oder ein Ernten der Früchte der Pflanzen zu ermöglichen. Insbesondere im Weinbau werden an sich bekannte Überzeilengeräte eingesetzt, die im Wesentlichen einen portalartigen, nach unten offenen U-förmigen Rahmen umfassen, an dem verschiedene Einrichtungen zur Bearbeitung der Pflanzen angeordnet sind. Beispielsweise können Laubschneideeinrichtungen an dem Rahmen vorgesehen sein. Der Rahmen ist als so genanntes Anbaugerät an einem landwirtschaftlichen Nutzfahrzeug, wie einem Traktor, befestigt. Das Nutzfahrzeug fährt dann zwischen zwei benachbarten Zeilen, um beispielsweise Laub einer Reihe von Weinstöcken zu entfernen.

Weiterhin sind Spritzgeräte bekannt, mit denen Spritzmittel, wie Fungizide oder Herbizide, ausgebracht werden können, um die Reben eines Weinbergs unter anderem vor Schädlingen zu schützen. Dazu sind an einem Rahmen verteilt mehrere Spritzmitteldüsen angeordnet. Beim Entlangfahren an der Zeile wird das Spritzmittel aus einem Vorratstank auf dem Nutzfahrzeug mit einer Pumpe gefördert und durch die Spritzmitteldüsen ausgespritzt und dabei, gegebenenfalls unter Verwendung eines Gebläses, fein zerstäubt und verteilt.

Ausgehend von diesem Stand der Technik ist der Fachmann vor die Aufgabe gestellt, eine Vorrichtung der eingangs genannten Art zu schaffen, bei der die Menge an benötigtem Spritzmittel reduziert ist.

Erfindungsgemäß wird die Aufgabe dadurch gelöst, dass der Rahmen zum Bearbeiten der Pflanzenzeile U-förmig ausgebildet ist, wobei die vertikalen Abschnitte des Rahmens aus zwei beabstandet und parallel zueinander ausgerichteten sowie miteinander verbundenen Längsträgern gefertigt sind, von denen der, in Fahrtrichtung gesehen, vordere Längsträger die Spritzmitteldüsen sowie die Luftdüsen der ersten Reihe und der andere die Luftdüsen der zweiten Reihe trägt.

Eine derart ausgebildete Vorrichtung verfügt nicht nur über mehrere Spritzmitteldüsen zum Ausbringen eines in der Regel flüssigen Spritzmittels, sondern auch über zusätzliche Luftdüsen, die am Rahmen der Vorrichtung angeordnet sind. Die Lüftdüsen sind derart am Rahmen verteilt, dass die aus den Luftdüsen austretende Luft bzw. die Luftstrahlen quasi als Führung für das aus den Spritzmitteldüsen ausgetragene Spritzmittel dienen. Durch die zusätzlichen Luftstrahlen wird das Spritzmittel gezielt zu den zu behandelnden Pflanzen, insbesondere Weinreben, geleitet und insbesondere eine Laubwand der Pflanzenzeile durchbrochen, um das Spritzmittel gezielt in das Innere der Pflanzenzeile einzutragen. Dabei kann der Fachmann die Position, Anzahl und Ausrichtung der Spritz- und/oder Luftdüsen in Abhängigkeit von der Größe der zu behandelnden Pflanzen, der Fahrgeschwindigkeit der Vorrichtung bzw. des den Rahmen tragenden Nutzfahrzeuges sowie der Art des Spritzmittels wählen. Selbstverständlich kann die Vorrichtung für an sich beliebige Nutzpflanzen, wie Gemüse, Obst, Wein, Hopfen und dergleichen, eingesetzt werden.

Prinzipiell können die Luftdüsen und die Spritzmitteldüsen auch integriert ausgebildet sein, beispielsweise als kegeloder trichterartige Öffnung mit einem eingesetzten Spritzkegel, wodurch eine im Wesentlichen ringförmige Austrittsöffnung gebildet ist, durch die Luft und Spritzmittel gemeinsam ausströmen.

Mit den Luftdüsen wird eine Abdrift des ausgebrachten Spritzmittels erheblich verringert, was die benötigte Spritzmittelmenge pro Pflanze wesentlich reduziert und durch den Luftvorhang um die zu behandelnde Pflanzenzeile bzw. das verwirbelnde Luft-Spritzmittelgemisch nur wenig Spritzmittel in die Umgebung gelangt.

Durch die Ausgestaltung des Rahmens zum Bearbeiten der Pflanzenzeile werden die Pflanzen einer Zeile gleichzeitig von gegenüberliegenden Seiten besprüht, wodurch eine besonders gleichmäßige Behandlung aufgrund einer Verwirbelung in etwa in der Mitte der Zeile gewährleistet ist. Gleichzeitig wird durch die insbesondere oben und seitlich angeordneten Luftdüsen der zweiten Reihe, die selbstverständlich unabhängig von den Luftdüsen der ersten Reihe sowohl verstellbar als auch mit Luft, gegebenenfalls aus einem zweiten Gebläse, beaufschlagbar sind, eine allseitige Luftglocke um die Pflanzenzeile erzeugt.

Bevorzugt sind die Luftdüsen und/oder die Spritzmitteldüsen in einem seitlichen und/oder oberen Bereich des Rahmens angeordnet. Mit den seitlichen Luftdüsen wird zum einem eine Führung des von seitlichen Spritzdüsen ausgespritzten Spritzmittels und zum anderen eine seitliche Luft-Abschirmung des Luft-Spritzmittelgemisches erreicht. Besonders mit einer im oberen Bereich des U-förmigen Rahmens angeordneten Luftdüse kann ein abschirmender Luftstrom nach schräg unten erzeugt werden. Eine seitlich in einem unteren Bereich angeordnete Luftdüse zum Luftausstoß zur Führung des Spritzmittels wird vorzugsweise nach schräg oben ausgerichtet. Insgesamt werden die Luft- und Spritzdüsen, derart ausgerichtet, dass in etwa der Mitte der zu behandelnden Pflanzenzeile eine Verwirbelung des gegenläufig nach hinten ausgetragenen Spritzmittels zu dessen Verwirbelung erzielt und vorzugsweise mit Luft aus den Luftdüsen der zweiten Reihe einen Luftvorhang um die zu behandelnde Pflanze und den Spritznebel erzeugt wird, wodurch zum einen die insgesamt benötigte Spritzmittelmenge reduziert und die unmittelbare Umgebung vor einer Belastung durch das ausgetragene Spritzmittel geschützt ist.

Zur Anpassung der Vorrichtung an verschiedene zu bearbeitende Nutzpflanzen bzw. verschiedene Anbausituationen an unterschiedlichen Nutzfahrzeugen sind die Luftdüsen und/oder die Spritzmitteldüsen in ihrer jeweiligen Ausrichtung einstellbar. Dies kann entweder für jede Düse einzeln und manuell erfolgen oder es sind beispielsweise über eine Einstellvorrichtung alle Spritzmitteldüsen an einer Seite des Rahmens derart miteinander gekoppelt, dass sie miteinander verschwenkt werden. Dies kann auch ferngesteuert erfolgen. Somit kann ein Spritzmittel in Bewegungsrichtung der Vorrichtung nach vorne und/oder hinten sowie nach oben oder unten gerichtet ausgespritzt werden. Gleiches gilt für die aus den Luftdüsen austretende Luft bzw. Luftstrahlen.

Zur weiteren Anpassung sind die Luftdüsen und/oder die Spritzmitteldüsen in ihrer Position relativ zum Rahmen veränderbar. Beispielsweise kann eine seitlich Spritzmitteldüse in ihrer Höhe zum Rahmen nach oben oder unten verschoben werden. Besonders bei dieser Ausgestaltung bietet es sich an, dass die Luftdüsen und die Spritzmitteldüsen jeweils über Schläuche mit einem zentralen Gebläse bzw. einem Spritzmitteltank in Verbindung stehen, um beliebige Positionen relativ zum Rahmen einnehmen zu können.

Um beim gezielten Einbringen des Spritzmittels in die zu behandelnde Pflanze bzw. Pflanzenzeile einen Fahrtwind auszunutzen, sind vorzugsweise die Spritzmitteldüsen und die Luftdüsen der ersten Reihe, in Fahrtrichtung gesehen, vor den Luftdüsen der zweiten Reihe angeordnet.

In Ausgestaltung sind die Spritzmitteldüsen über Spritzmittelschläuche mit einer zentralen, an einem Spritzmitteltank angeschlossenen Pumpe und die Luftdüsen über Druckluftschläuche mit dem Gebläse verbunden.

Zur vereinfachten Einstellung der Sprührichtung sind vorzugsweise die vertikalen Abschnitte des Rahmens verschwenkbar an einer die Pflanzenzeile übergreifenden Horizontalhalterung befestigt.

Zweckmäßigerweise sind die Fördermengen der durch die Luftdüsen geförderten Luft variabel einstellbar, um bei geringem Spritzmitteleinsatz auch nur eine leichte Unterstützung durch zusätzliche Luftstrahlen zu ermöglichen oder bei starkem Spritzmitteleinsatz die volle Kapazität auszuschöpfen oder eine anforderungsgerechte Luftglocke einzustellen. Dies kann beispielsweise durch variable Spaltöffnungen oder in sonstiger dem Fachmann bekannter Weise, auch z. B. durch die Anordnung mehrerer Gebläse, erfolgen.

Zur Anpassung an verschiedene Arten bzw. Größen von Nutzpflanzen ist der Rahmen in seiner Breite und/oder Höhe veränderbar. Dies kann beispielsweise bei Vierkant- oder Rundrohren, die den Rahmen bilden, durch das Ineinanderschieben bzw. Auseinanderziehen mehrerer Rohrsegmente erfolgen oder über sonstige teleskopierbare Einrichtungen. Die Anpassung der Dimensionierung des Rahmens kann entweder manuell erfolgen oder elektrisch, beispielsweise durch einen elektromotorischen Antrieb einer Teleskopiereinrichtung, und/oder hydraulisch. Teile des Rahmens können auch mit einer Spindel teleskopiert werden.

Vorzugsweise ist der Rahmen derart ausgelegt, dass er an einen Geräteträger eines landwirtschaftlichen Nutzfahrzeugs montiert werden kann. Gegebenenfalls kann das Gebläse der Vorrichtung auch über die Zapfwelle beispielsweise eines Traktors betrieben werden. Dabei kann die Vorrichtung bzw. der Rahmen an dem Nutzfahrzeug, in Fahrtrichtung gesehen, vorne oder hinten, jeweils links oder rechts am Nutzfahrzeug angeordnet werden, um eine Zeile von Nutzpflanzen zu bearbeiten. Selbstverständlich wird je nach Montageort die Ausrichtung und Positionierung der Spritzmitteldüsen sowie der Luftdüsen entsprechend eingestellt, um optimale Ergebnisse zu erzielen. Der Rahmen kann auch Bestandteil eines Laubschneiders sein, an dem die Spritzmittel- und Luftdüsen befestigt werden. Solche als Überzeilengeräte ausgebildeten Laubschneider werden im Weinbau häufig eingesetzt und sind daher bei vielen Winzern vorhanden. Sonach ist es möglich, in einem Arbeitsgang sowohl überschüssiges Laub abzuschneiden als auch ein notwendiges Spritzmittel auszubringen. Um die Montage zu vereinfachen, können die Spritzmittel- und Luftdüsen an einem Gestänge gehaltert sein, das an dem Rahmen des Laubschneiders zu befestigen ist.

Nach einer Weiterbildung ist der Rahmen an einem auf einem Fahrgestell, insbesondere mit einem Antriebsmotor, angeordneten Halter befestigt. Das ein- oder mehrachsige Fahrgestell ist beispielsweise vor oder hinter einem Nutzfahrzeug anzuordnen und die Radachsen können starr oder pendelnd gelagert sein. Gegebenenfalls können auch mehrere Fahrgestelle aneinander gekuppelt werden.

Zur Erzielung einer relativ hohen Laufruhe ist bevorzugt mindestens eine Radachse des Fahrgestells in ihrer Breite einstellbar und/oder hydraulisch oder mechanisch angetrieben. Die Einstellung bzw. Verstellung der Radachse kann sowohl manuell als auch hydraulisch erfolgen. Beispielsweise kann eine relativ geringe Achsbreite im Weinberg oder auf der Straße und eine große Achsbreite auf einem Acker verwendet werden. Der Achsantrieb wirkt sich insbesondere in Steillagen vorteilhaft aus. Demnach ist das Fahrgestell bei einem standardisierten Aufbau vielseitig verwendbar.

In weiterer Ausgestaltung umfasst der Halter vertikale Stützen, an denen oberseitig zwei Kragarme befestigt sind, um zwei Rahmen zur gleichzeitigen Bearbeitung von zwei Zeilen zu haltern. Die Kragarme dienen zur Befestigung von landwirtschaftlichen Geräten, wie beispielsweise einem Rahmen der Vorrichtung. Zweckmäßigerweise sind die Kragarme in ihrer Ausladung einzeln oder gemeinsam arretierbar verstellbar. Um eine möglicht große Ausladung bei einer verhältnismäßig stabilen Lagerung zu erzielen, erstrecken sich vorzugsweise die Kragarme gegenläufig zu Führungsarmen, die in einer gemeinsamen horizontalen Ebene hintereinander in Führungsrohren verschiebbar gelagert sind. Selbstverständlich können zwischen den Führungsrohren und den Führungsarmen Lagerbauteile und/oder Verstell- bzw. Arretiereinrichtungen vorgesehen sein. Zweckmäßigerweise sind die gegenüberliegenden Kragarme rechtwinklig an jeweils einem Distanzarm befestigt, der rechtwinklig horizontal sowie stirnseitig von dem entsprechenden Führungsarm abgeht, wobei die Kragarme in einer gemeinsamen horizontalen Ebene verlaufen. Damit steht bei einer hintereinander liegenden Anordnung der Führungsarme eine Befestigungsebene der Kragarme zur Halterung unterschiedlicher Vorrichtungen zur Verfügung. Um eine sichere Befestigung von Anbauteilen zu ermöglichen, sind bevorzugt gegenüberliegende Kragarme in zwei parallel und beabstandet zueinander verlaufenden Ebenen übereinander angeordnet. Demnach stehen jeweils zwei übereinander angeordnete Kragarme pro Seite zur Verfügung.

Vorzugsweise ist der Halter bzw. sind seine vertikalen Stützen gemeinsam oder separat in der Höhe verstellbar. Dies ist insbesondere bei der Bearbeitung von terassenförmig oder an Hängen angelegten Pflanzenzeilen von Vorteil.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles mit Bezugnahme auf die Zeichnungen näher erläutert. Es zeigt:

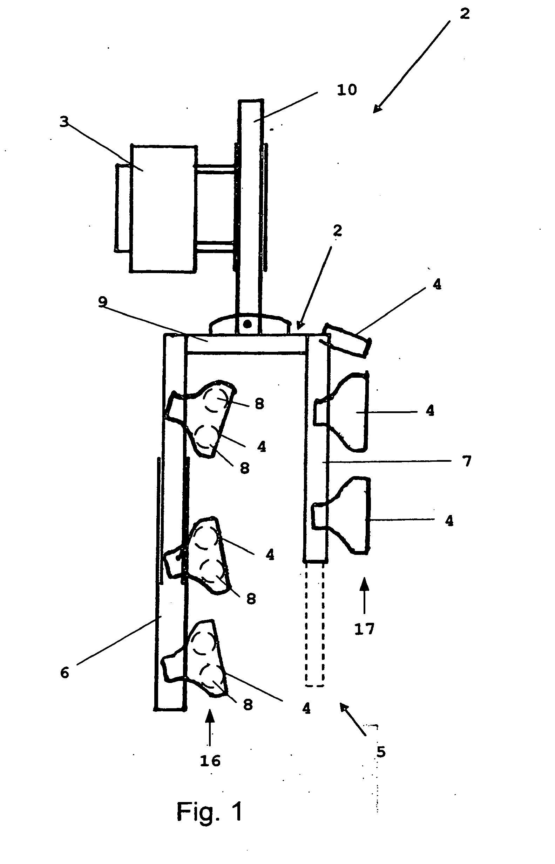

- Fig.1: eine Teil-Darstellung einer Seitenansicht einer erfindungsgemäßen Vorrichtung,

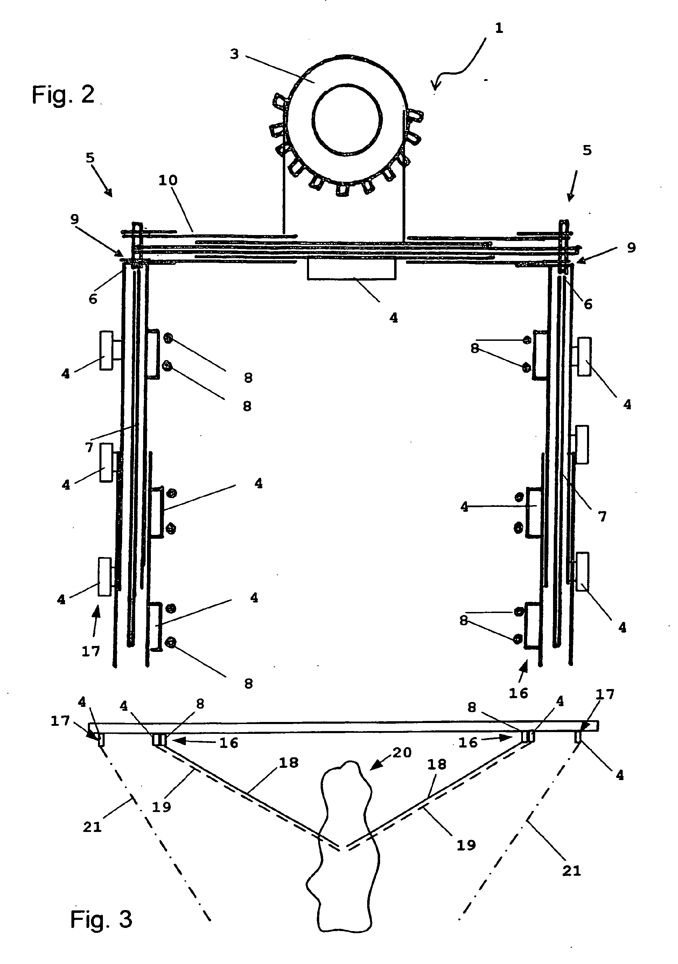

- Fig.2: eine Vorderansicht der Vorrichtung nach Fig. 1,
- Fig.3: eine schematische Darstellung einer Verwendung der Vorrichtung nach Fig. 1,

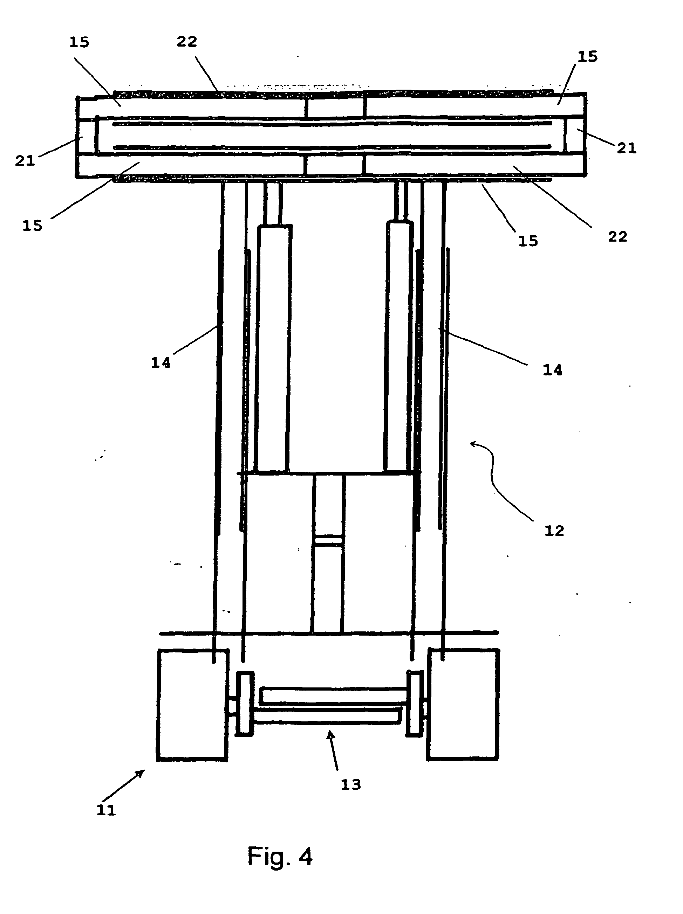

- Fig.4: eine Darstellung eines Fahrgestells für die Vorrichtung nach Fig. 1,

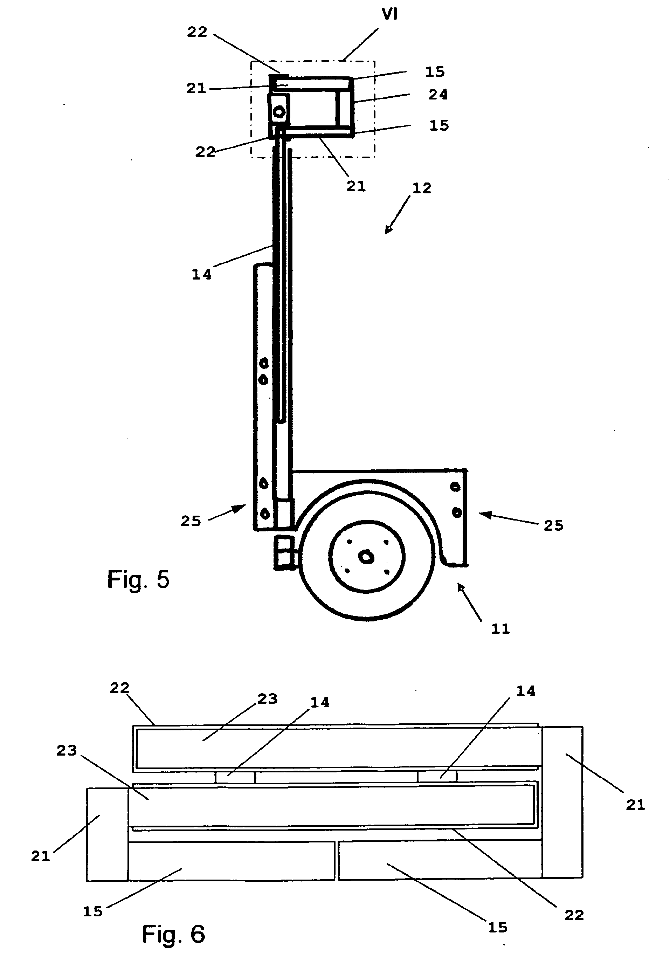

- Fig.5: eine Seitenansicht des Fahrgestells nach Fig. 4 und
- Fig.6: eine schematische Darstellung einer Draufsicht auf die vergrößerte Einzelheit VI nach Fig. 5.

Die Vorrichtung 1 umfasst im Wesentlichen einen portalartigen, U-förmigen Rahmen 2, an dem ein Gebläse 3 zum Ansaugen und Fördern von Luft vorgesehen ist, das über nicht dargestellte Schläuche mit Luftdüsen 4 in Verbindung steht. Der Rahmen 2 ist an jedem seiner vertikalen Abschnitte 5 aus parallel zueinander ausgerichteten sowie miteinander verbundenen Längsträgern 6, 7 gefertigt, wobei der eine Längsträger 6 teleskopierbar ausgebildet ist und eine erste Reihe 16 Luftdüsen 4 sowie Spritzmitteldüsen 8 trägt und der andere Längsträger 7 mit einer zweiten Reihe 17 Luftdüsen bestückt ist. Hierbei sind die Spritzmitteldüsen 8 und die Luftdüsen 4 der ersten Reihe 16, in Fahrtrichtung der Vorrichtung gesehen, vor den Luftdüsen 4 der zweiten Reihe 16 angeordnet. Zur gezielten Einbringung eines Spritzmittelnebels in zu behandelnde Pflanzenzeile sowie zur Erzeugung einer den Spritzmittelnebel umgebenden und richtenden Luftglocke sind sowohl die Spritzmitteldüsen 8 als auch die Luftdüsen 4 der ersten Reihe 16 und der zweiten Reihe 17 derart verstellbar gelagert, dass zum einen Spritzmittel-18 und Luftstrahlen 19 ins Zentrum der Pflanzenzeile 20 gerichtet sind und weitere Luftstrahlen 21 die den Spritzmittelnebel abschirmende Luftglocke bilden. Die beiden Längsträger 6, 7 sind an ihren oberen Ende über ein Verbindungsprofil 9 miteinander gekoppelt, wobei das Verbindungsprofil 9 gelenkig mit einer teleskopierbaren Horizontalhalterung 10 in Verbindung steht, die in ihrer Mitte eine Luftdüse 4 trägt.

Der Rahmen 2 lässt sich an einem landwirtschaftlichen Nutzfahrzeug oder an einem an ein Nutzfahrzeug anzukuppelnden, Anhängevorrichtungen 25 aufweisenden Fahrgestell 11 angeordneten Halter 12 befestigen. Das Fahrgestell 11 weist eine in ihrer Breite einstellbare Radachse 13 auf, um eine relativ hohe Laufruhe zu erzielen. Im Weiteren umfasst der Halter 12 vertikale Stützen 14, die hydraulisch in ihrer Länge entweder gemeinsam oder einzeln verstellbar sind und an ihren oberen Enden in ihrer Ausladung verstellbare Kragarme 15 tragen. An dem Halter 12 lassen sich die Rahmen 2 von zwei Vorrichtungen 1 befestigen, um gleichzeitig zwei Zeilen von Pflanzen zu bearbeiten.

Die Kragarme 15 sind endseitig an Distanzarmen 21 befestigt, die an in Führungsrohren 22 verschiebbar gelagerten Führungsarmen 23 festgelegt sind. Die Kragarme 15 verlaufen in einer zu den Führungsarmen 23 entgegengesetzten Richtung und bilden gemeinsam mit den Distanzarmen 21 im Wesentlichen eine C-Form. Pro Seite sind zwei übereinander angeordnete Kragarme 15 vorgesehen, die über Distanzrohre 24 miteinander verbunden sind. An den Führungsrohren 22 sind die vertikalen Stützen 14 des Halters 12 angeordnet.

Prinzipiell ist es möglich, die Spritzmitteldüsen 8 und die Luftdüsen 4 als gemeinsames Bauteil auszuführen, beispielsweise als ein sich trichterförmig erweiterndes Auslassventil, in das wiederum ein Spritzkegel eingesetzt ist, so dass durch einen im Wesentlichen ringförmigen Spalt ein Luft/Spritzmittelgemisch austritt.

## Patentansprüche

1. Vorrichtung zum Spritzen von Pflanzenzeilen (20), insbesondere Spalierkulturen, die entlang der jeweiligen Pflanzenzeile verfahrbar ist, mit einem Rahmen (2) zur Halterung von mit einem Spritzmittel beaufschlagten Spritzmitteldüsen (8) und mit mit mindestens einem Gebläse (3) gekoppelten Luftdüsen (4), die den Spritzmitteldüsen (8) derart zugeordnet sind, dass die aus den in zwei Reihen angeordneten Luftdüsen (4) austretende Luft das aus den Spritzmitteldüsen (8) austretende Spritzmittel in Richtung der Pflanzenzeile führt, wobei die aus den Luftdüsen (4) der ersten Reihe (16) austretende Luft das Spritzmittel beaufschlagt und die aus den Luftdüsen (4) der zweiten Reihe (17) austretende Luft einen Luftvorhang um das Luft-Spritzmittelgemisch bildet, **dadurch gekennzeichnet, dass** der Rahmen (2) zum Bearbeiten der Pflanzenzeile (20) U-förmig ausgebildet ist, wobei die vertikalen Abschnitte (5) des Rahmens (2) aus zwei beabstandet und parallel zueinander ausgerichteten sowie miteinander verbundenen Längsträgern (6, 7) gefertigt sind, von denen der, in Fahrtrichtung gesehen, vordere Längsträger (7) die Spritzmitteldüsen (8) sowie die Luftdüsen (4) der ersten Reihe (16) und der andere die Luftdüsen (4) der zweiten Reihe (17) trägt.

2. Vorrichtung nach Anspruch 1, **dadurch gekennzeichnet, dass** die Luftdüsen (4) und/oder die Spritzmitteldüsen (8) in einem seitlichen und/oder oberen Bereich des Rahmens (2) angeordnet sind.

3. Vorrichtung nach einem der Ansprüche 1 oder 2, **dadurch gekennzeichnet, dass** die Luftdüsen (4) und/oder die Spritzmitteldüsen (8) in ihrer jeweiligen Ausrichtung einstellbar sind.

4. Vorrichtung nach einem der Ansprüche 1 bis 3, **dadurch gekennzeichnet, dass** die Luftdüsen (4) und/oder die Spritzmitteldüsen (8) in ihrer Position relativ zum Rahmen (2) veränderbar sind.

5. Vorrichtung nach einem der Ansprüche 1 bis 4, **dadurch gekennzeichnet, dass** die Spritzmitteldüsen (8) und die Luftdüsen (4) der ersten Reihe (16), in Fahrtrichtung gesehen, vor den Luftdüsen (4) der zweiten Reihe (17) angeordnet sind.

6. Vorrichtung nach einem der Ansprüche 1 bis 5, **dadurch gekennzeichnet, dass** die Spritzmitteldüsen (8) über Spritzmittelschläuche mit einer zentralen, an einem Spritzmitteltank angeschlossenen Pumpe und die Luftdüsen (4) über Druckluftschläuche mit dem Gebläse (3) verbunden sind.

7. Vorrichtung nach Anspruch 1, **dadurch gekennzeichnet, dass** die vertikalen Abschnitte (5) des Rahmens (2) verschwenkbar an einer die Pflanzenzeile (20) übergreifenden Horizontalhalterung (10) befestigt sind.

8. Vorrichtung nach einem der Ansprüche 1 bis 7, **dadurch gekennzeichnet, dass** eine geförderte Luftmenge veränderbar ist.

9. Vorrichtung nach Anspruch 1, **dadurch gekennzeichnet, dass** der Rahmen (2) in seiner Breite und/oder Höhe veränderbar ist.

10. Vorrichtung nach einem der Ansprüche 1 bis 9, **dadurch gekennzeichnet, dass** der Rahmen (2) an einem Geräteträger eines landwirtschaftlichen Nutzfahrzeugs montierbar ist.

11. Vorrichtung nach einem der Ansprüche 1 bis 9, **dadurch gekennzeichnet, dass** der Rahmen (2) Bestandteil eines Laubschneiders ist.

12. Vorrichtung nach einem der Ansprüche 1 bis 9, **dadurch gekennzeichnet, dass** der Rahmen (2) an einem auf einem insbesondere einachsigen Fahrgestell (11) angeordneten Halter (12) befestigt ist.

13. Vorrichtung nach Anspruch 12, **dadurch gekennzeichnet, dass** das Fahrgestell (11) vor oder hinter einem Nutzfahrzeug anzuordnen ist.

14. Vorrichtung nach Anspruch 12 oder 13, **dadurch gekennzeichnet, dass** mindestens eine Radachse (13) des Fahrgestells (11) in ihrer Breite einstellbar und/oder hydraulisch oder mechanisch angetrieben ist.

15. Vorrichtung nach Anspruch 12, **dadurch gekennzeichnet, dass** der Halter (12) vertikale Stützen (14) umfasst, an denen oberseitig zwei Kragarme (15) befestigt sind, um zwei Rahmen (2) zur gleichzeitigen Bearbeitung von zwei Pflanzenzeilen (20) zu haltern.

16. Vorrichtung nach Anspruch 15, **dadurch gekennzeichnet, dass** die Kragarme (15) in ihrer Ausladung einzeln oder gemeinsam arretierbar verstellbar sind.

17. Vorrichtung nach Anspruch 15 oder 16, **dadurch gekennzeichnet, dass** sich die Kragarme (15) gegenläufig zu Führungsarmen (23) erstrecken, die in einer gemeinsamen horizontalen Ebene hintereinander in Führungsrohren (22) verschiebbar gelagert sind.

18. Vorrichtung nach einem der Ansprüche 15 bis 17, **dadurch gekennzeichnet, dass** die gegenüberliegenden Kragarme (15) rechtwinklig an jeweils einem Distanzarm (21) befestigt sind, der rechtwinklig horizontal sowie stirnseitig von dem entsprechenden Führungsarm (23) abgeht, wobei die Kragarme (15) in einer gemeinsamen horizontalen Ebene verlaufen.

19. Vorrichtung nach einem der Ansprüche 15 bis 18, **dadurch gekennzeichnet, dass** gegenüberliegende Kragarme (15) in zwei parallel und beabstandet zueinander verlaufenden Ebenen übereinander angeordnet sind.

20. Vorrichtung nach Anspruch 14 **dadurch gekennzeichnet, dass** der Halter (12) bzw. seine vertikalen Stützen (14) gemeinsam oder separat in der Höhe verstellbar sind.

## Claims

1. Arrangement for spraying lines of plants (20), in particular trellis crops, which can be moved along the respective line of plants, having a frame (2) for holding spray nozzles (8) which are charged with a spray and having air nozzles (4) which are coupled to at least one blower (3) and which are assigned to the spray nozzles (8) such that the air that emerges from the air nozzles (4), which are arranged in two rows, guides the spray that emerges from the spray nozzles (8) in the direction of the line of plants, wherein the air that emerges from the air nozzles (4) of the first row (16) acts on the spray and the air that emerges from the air nozzles (4) of the second row (17) forms a curtain of air around the air-spray mixture, **characterized in that** the frame (2) is formed in a U-shaped manner in order to treat the lines of plants (20), with the vertical portions (5) of the frame (2) being produced from two longitudinal carriers (6, 7) which are oriented in a manner spaced apart from and parallel to one another and are connected together and of which the front longitudinal carrier (7), as seen in the direction of travel, carries the spray nozzles (8) and the air nozzles (4) of the first row (16) and the other carries the air nozzles (4) of the second row (17).

2. Arrangement according to Claim 1, **characterized in that** the air nozzles (4) and/or the spray nozzles (8) are arranged in a lateral and/or upper region of the frame (2).

3. Arrangement according to either of Claims 1 and 2, **characterized in that** the respective orientation of the air nozzles (4) and/or the spray nozzles (8) can be set.

4. Arrangement according to one of Claims 1 to 3, **characterized in that** the position of the air nozzles (4) and/or the spray nozzles (8) in relation to the frame (2) can be changed.

5. Arrangement according to one of Claims 1 to 4, **characterized in that** the spray nozzles (8) and the air nozzles (4) of the first row (16), as seen in the direction of travel, are arranged in front of the air nozzles (4) of the second row (17).

6. Arrangement according to one of Claims 1 to 5, **characterized in that** the spray nozzles (8) are connected via a spray hose to a central pump which is connected to a spray tank, and the air nozzles (4) are connected to the blower (3) via compressed air hoses.

7. Arrangement according to Claim 1, **characterized in that** the vertical portions (5) of the frame (2) are fastened in a pivotable manner to a horizontal holder (10) which reaches over the line of plants (20).

8. Arrangement according to one of Claims 1 to 7, **characterized in that** the quantity of air conveyed can be changed.

9. Arrangement according to Claim 1, **characterized in that** the width and/or height of the frame (2) can be changed.

10. Arrangement according to one of Claims 1 to 9, **characterized in that** the frame (2) can be mounted on a tool carrier of an agricultural utility vehicle.

11. Arrangement according to one of Claims 1 to 9, **characterized in that** the frame (2) is a constituent part of a foliage cutter.

12. Arrangement according to one of Claims 1 to 9, **characterized in that** the frame (2) is fastened to a holder (12) that is arranged on an, in particular single-axle, chassis (11).

13. Arrangement according to Claim 12, **characterized in that** the chassis (11) is intended to be arranged in front of or behind a utility vehicle.

14. Arrangement according to Claim 12 or 13, **characterized in that** the width of at least one axle (13) of the chassis (11) can be set and/or said axle (13) can be hydraulically or mechanically driven.

15. Arrangement according to Claim 12, **characterized in that** the holder (12) comprises vertical supports (14) on the top side of which there are fastened two cantilevers (15) in order to hold two frames (2) for the simultaneous treatment of two lines of plants (20).

16. Arrangement according to Claim 15, **characterized in that** the extension of the cantilevers (15) can be individually or jointly adjusted in a lockable manner.

17. Arrangement according to Claim 15 or 16, **characterized in that** the cantilevers (15) extend in the opposite direction to guide arms (23) which are mounted in a movable manner in a common horizontal plane one after another in guide tubes (22).

18. Arrangement according to one of Claims 15 to 17, **characterized in that** the opposite cantilevers (15) are fastened at right angles on in each case one spacer arm (21) which protrudes horizontally at right angles and also from the end side of the corresponding guide arm (23), with the cantilevers (15) extending in a common horizontal plane.

19. Arrangement according to one of Claims 15 to 18, **characterized in that** the opposite cantilevers (15) are arranged one above the other in two planes that extend in a manner parallel to and spaced apart from one another.

20. Arrangement according to Claim 14, **characterized in that** the height of the holder (12) or its vertical supports (14) can be adjusted jointly or separately.

## Revendications

1. Dispositif de pulvérisation de rangées (20) de plantes, en particulier de cultures en espalier, qui peut être déplacé le long de la rangée de plantes concernée et qui présente un bâti (2) qui porte des tuyères (8) à agent de pulvérisation alimentées en agent de pulvérisation et des tuyères d'air (4) raccordées à au moins un ventilateur (3) et associées aux tuyères (8) à agent de pulvérisation de telle sorte que l'air qui sort des tuyères d'air (4) disposées en deux rangées guide l'agent de pulvérisation sortant des tuyères (8) à agent de pulvérisation en direction des rangées de plantes,
l'air sortant des tuyères d'air (4) de la première rangée (16) étant appliqué sur l'agent de pulvérisation et l'air sortant des tuyères d'air (4) de la deuxième rangée (17) formant un rideau d'air autour du mélange d'air et d'agent de pulvérisation,
**caractérisé en ce que**
pour le traitement des rangées (20) de plantes, le bâti (2) a une configuration en U,
**en ce que** les parties verticales (5) du bâti (2) sont réalisées à partir de deux supports longitudinaux (6, 7) disposés à distance l'un de l'autre, orientés parallèlement l'un à l'autre, reliés l'un à l'autre et dont le support longitudinal (7) situé en avant dans la direction d'avancement porte les tuyères (8) à agent de pulvérisation et les tuyères d'air (4) de la première rangée (16) et l'autre porte les tuyères d'air (4) de la deuxième rangée (17).

2. Dispositif selon la revendication 1, **caractérisé en ce que** les tuyères d'air (4) et/ou les tuyères (8) à agent de pulvérisation sont disposées dans une partie latérale et/ou une partie supérieure du bâti (2).

3. Dispositif selon l'une des revendications 1 ou 2, **caractérisé en ce que** l'orientation des tuyères d'air (4) et/ou des tuyères (8) à agent de pulvérisation est ajustable.

4. Dispositif selon l'une des revendications 1 à 3, **caractérisé en ce que** la position des tuyères d'air (4) et/ou des tuyères (8) à agent de pulvérisation par rapport au bâti (2) peut être modifiée.

5. Dispositif selon l'une des revendications 1 à 4, **caractérisé en ce que** les tuyères (8) à agent de pulvérisation et les tuyères d'air (4) de la première rangée (16) sont disposées en avant des tuyères d'air (4) de la deuxième rangée (17) dans la direction d'avancement.

6. Dispositif selon l'une des revendications 1 à 5, **caractérisé en ce que** les tuyères (8) à agent de pulvérisation sont reliées par des tuyaux flexibles à agent de pulvérisation à une pompe centrale raccordée à une cuve à agent de pulvérisation et **en ce que** les tuyères d'air (4) sont reliées au ventilateur (3) par un tuyau flexible à air comprimé.

7. Dispositif selon la revendication 1, **caractérisé en ce que** les parties verticales (5) du bâti (2) sont fixées à pivotement sur un support horizontal (10) qui chevauche les rangées (20) de plantes.

8. Dispositif selon l'une des revendications 1 à 7, **caractérisé en ce que** le débit d'air transporté peut être modifié.

9. Dispositif selon la revendication 1, **caractérisé en ce que** la largeur et/ou la hauteur du bâti (2) peuvent être modifiées.

10. Dispositif selon l'une des revendications 1 à 9, **caractérisé en ce que** le bâti (2) peut être monté sur un porte-appareil d'un véhicule utilitaire agricole.

11. Dispositif selon l'une des revendications 1 à 9, **caractérisé en ce que** le bâti (2) fait partie d'un coupe-feuilles.

12. Dispositif selon l'une des revendications 1 à 9, **caractérisé en ce que** le bâti (2) est fixé sur un support (12) disposé sur un chariot (11) doté en particulier d'un essieu.

13. Dispositif selon la revendication 12, **caractérisé en ce que** le chariot (11) est disposé en avant ou en arrière d'un véhicule utilitaire.

14. Dispositif selon les revendications 12 ou 13, **caractérisé en ce qu'**au moins un essieu (13) des roues du chariot (11) a une largeur ajustable et/ou est entraîné hydrauliquement ou mécaniquement.

15. Dispositif selon la revendication 12, **caractérisé en ce que** le support (12) comporte des appuis verticaux (14) sur le côté supérieur desquels sont fixés deux bras (15) en porte-à-faux qui maintiennent deux bâtis (2) permettant de traiter simultanément deux rangées (20) de plantes.

16. Dispositif selon la revendication 15, **caractérisé en ce que** les porte-à-faux des bras (15) peuvent être ajustés et bloqués séparément ou ensemble.

17. Dispositif selon les revendications 15 ou 16, **caractérisé en ce que** les bras (15) en porte-à-faux s'étendent en opposition aux bras de guidage (23) qui sont montés l'un derrière l'autre à coulissement dans des tubes de guidage (22) situés sur un plan horizontal commun.

18. Dispositif selon l'une des revendications 15 à 17, **caractérisé en ce que** les bras (15) en porte-à-faux mutuellement opposés sont fixés perpendiculairement chacun sur un bras d'écartement (21) qui déborde perpendiculairement à l'horizontale ainsi que frontalement du bras de guidage (23) correspondant, les bras (15) en porte-à-faux s'étendant dans un plan horizontal commun.

19. Dispositif selon l'une des revendications 15 à 18, **caractérisé en ce que** des bras (15) en porte-à-faux opposés l'un à l'autre sont disposés les uns au-dessus des autres en deux plans parallèles et distants l'un de l'autre.

20. Dispositif selon la revendication 14, **caractérisé en ce que** le support (12) et son appui vertical (14) peuvent être ajustés en hauteur ensemble ou séparément.
